# EUROPEAN PATENT APPLICATION

(11) **EP 3 192 678 A1**
(43) Date of publication of application: **19.07.2017**
(21) Application number: 16151378.3
(22) Date of filing: 14.01.2016
(51) Int. Cl.: B60D 1/52, B60D 1/155, B60D 1/36, B60D 1/38

(54) **A SPLITABLE TRAILER COUPLER**

(71) Applicant: Lock on Limited, Enniscrone Co. Sligo (IE)
(72) Inventor: Roper, Paul, Enniscrone, Co. Sligo (IE); Murphy, Paul, Naas, Co. Kildare (IE); O'Loughlin, Ronan, Knocknacarra, Galway (IE); Roper, Alan, Cliffoney, Co. Sligo (IE)
(74) Representative: Tomkins & Co

(57) **Abstract**

A splitable trailer coupler for coupling a trailer to a towing vehicle, the splitable trailer coupler comprising a coupler bar (2) comprising means (201) for attachment to a towing vehicle, a housing (3) for attachment to a trailer, wherein at least a portion of the coupler bar is removably receivable into the housing, and means for retaining the at least a portion of the coupler bar in the housing, wherein the trailer coupler is adapted to permit translational movement of the at least a portion of the coupler bar along the longitudinal axis of the housing when the at least a portion of the coupler bar is retained within the housing.

## Description

### Field of the Invention

The present invention relates to trailer couplers, which are used to connect a trailer to a trailer hitch of a towing vehicle. In particular the present invention relates to a splitable, or two-part or separatable trailer coupler.

### Background to the Invention

In general, to attach a trailer to a towing vehicle using a standard trailer coupler, it is necessary to reverse the towing vehicle into a position, substantially aligned with the trailer, such that the trailer hitch/tow bar of the towing vehicle is as close to the trailer coupler as possible, ideally positioning the tow bar exactly below the trailer coupler. For most trailers in the VCA 02 class (i.e. 750 kg to 3500 kg (mass on the axels)), a jockey wheel is usually employed to raise or lower the trailer coupler of the trailer vehicle in order to engage the trailer coupler onto the tow ball of the towing vehicle.

Once the trailer coupler has engaged the tow bar, the towing vehicle and trailer are connected together in an articulated manner, the engaged tow bar and trailer coupler forming a pivoting point. Given the number of difficulties associated with this manner of coupling a trailer and a towing vehicle, a number of two-part trailer couplers have been developed.

GB2252290 describes a split trailer coupler for securing a trailer to a towing vehicle comprising a trailer coupler for securement to a tow ball on the vehicle. The trailer coupler includes a rearwardly projecting member to which one end of a towing cable is anchored. A winch is attached to the other end of the cable and the trailer coupler includes a hollow shaft whose end remote from the winch is shaped internally to receive the rearwardly projecting member of the trailer coupler. A lock secures the projecting member within the shaft.

WO2008107426 describes a trailer coupler for coupling a trailer having a trailer braking system to a towing vehicle, the trailer coupler comprising a pair of interlocking parts, and a locking mechanism for releasably locking the interlocking parts together. The pair of interlocking parts comprise a forward part comprising a coupling head for engaging a ball hitch and the rearward part is mountable on the trailer vehicle. The forward part comprises a towing vehicle reverse force relay mechanism; and the rearward part comprises a trailer brake linking mechanism such that when the pair of interlocking parts are locked together the towing vehicle reverse force relay mechanism engages the trailer brake linking mechanism.

Trailer coupler having rectangular portions such as that described in WO2008107426 require exact alignment in order for the coupler to retract into its housing. Misalignment results in significant stress being placed on the winch due to the inability of the coupler to be received in the housing. Advancement of the coupler through the housing is also blighted by frictional sticking forces. In contrast couplers comprising a frustoconical rear section adjacent the coupling head such as those of GB2252290 and DE19907808 retract smoothly into their respective housings, due to the complementary frustoconical coupler and housing sections. However, the configuration of said couplers precludes the possibility of incorporating damping and braking systems in said trailer coupler which makes these trailer couplers unsuitable for large trailers carrying heavy loads.

It is an object of the present invention to provide an improved two-part trailer coupler which addresses problems experienced with the use of prior art split trailer couplers.

### Summary of the Invention

In one aspect, the present invention provides a splitable trailer coupler for coupling a trailer to a towing vehicle, the splitable trailer coupler comprising:
(i) a coupler bar comprising means for attachment to a towing vehicle; and
(ii) a housing for attachment to a trailer; wherein at least a portion of the coupler bar is removably receivable into the housing; and
(iii) means for retaining the coupler bar in the housing;
wherein the trailer coupler is adapted to permit translational movement of the at least a portion of the coupler bar along the longitudinal axis of the housing when the at least a portion of the coupler bar is retained within the housing.
By "is retained", it is meant when the means for retaining are inhibiting complete withdrawal of the coupler bar from the housing.

Preferably the trailer coupler is adapted to enable rotation of the coupler bar relative to the housing when the at least a portion of the coupler bar is retained within the housing.

In one embodiment the means for retaining the coupler bar comprises a sleeve into which the at least a portion of the coupler bar is secured. The sleeve may be capable of translational movement along the longitudinal axis of the housing.

Preferably the means for retaining the coupler bar in the housing further comprises locking means. The locking means may surround the coupler bar when the coupler bar is retained in the housing. The locking means may be adapted to automatically lock as the coupler bar is advanced into the housing. The locking means may be biased in a closed position and open upon contact from the coupler bar. The locking means may comprise a peripheral lock comprising: a plurality of jaws arranged in a ring about a central aperture into which an article to be locked is receivable; wherein each jaw is pivotable between an open position and a closed position, wherein the size of the central aperture is greater when then the jaws are in their open position; biasing means for biasing each jaws in its closed position; and actuation means for pivoting each jaw against the biasing force provided by the biasing means.

Preferably the biasing means comprises at least one stretchable connection between adjacent jaws. The at least one stretchable connection may be a spring. Each jaw may comprise a hook for each spring. In other embodiments the biasing means may not interconnect the jaws, the biasing means may be remote. Preferably each jaw is pivotable about a fulcrum pin which pivotally mounts the jaw to a static base. Preferably the actuation means comprises an actuation plate wherein rotation of the actuation plate relative to fulcrum pins causes a pivoting of the jaws.

Preferably each jaw is substantially trapezoid shaped in one cross-section. Each jaw may comprise multiple layers. Preferably each jaw has an object-engaging surface shaped to enable a close fit between the jaw and an object received in the central aperture when the jaw is in its closed position. The object-engaging surface is preferably concave.

The actuation means may comprise a manual handle. Preferably at least one slot is formed in the actuation plate. Each jaw may comprise at least one protrusion to travel within a corresponding slot in the actuator plate.

Preferably the splitable trailer coupler of the present invention further comprises means for attachment to a winch cable. Suitably, a cable may connect the coupler bar to a trailer through the housing. Alternative/additional means for connecting the coupler bar to the trailer may be employed which may or may not pass through the housing.

In one embodiment the coupler comprises a nose portion having cable connection means. The cable connection means may be connectable to a winch cable, thereby enabling retraction of the coupler bar into the housing by recoiling the winch cable.

Preferably the splitable trailer coupler of the present invention further comprises guiding means to guide the coupler bar into the housing. The guiding means may be provided on the coupler bar. Additionally or alternatively, the guiding means may be provided within the housing. Additionally or alternatively, the sleeve may be adapted to provide guiding means.

In one embodiment, the guiding means to guide the coupler bar into the housing are provided on the coupler bar and within the housing.

Preferably the splitable trailer coupler housing comprises damping means for damping movement of the coupler bar within the housing. Suitably, the damping means is selected from the group consisting of: spring damping means, pneumatic damping means, or hydraulic damping means. Suitably, the damping means comprises a spring arranged coaxially about and supported by the sleeve. This arrangement protects the spring from contact with, and damage from, the coupler bar.

Preferably the means for attachment to a towing vehicle comprises a tow bar socket. Suitably, the housing of the splitable trailer coupler of the present invention is adapted to accommodate a jockey wheel. The portion of the coupler bar which is removably receivable into the housing may be a coupler bar extension.

The present invention also provides for a trailer comprising a splitable trailer coupler as described above. The trailer may comprise a winch, alternatively a winch may be integrated within the splitable trailer coupler.

The trailer may comprise a turntable platform on which the housing is mountable, said platform being capable of rotating in a clockwise or anticlockwise direction, thereby aiding alignment between the housing and the coupler bar during retraction of the coupler bar into the housing. Once the coupler bar is retained within the housing, and the pivotable platform is correctly aligned with the tow vehicle, the pivotable platform is fixed to prevent unwanted rotation during towing. One method of platform lock to preventing turning of the platform may employ a plunger which drops down into aligned holes in the platform and an underlying surface of the trailer body. Such a lock, or another embodiment of lock may be manual or automatic.

The splitable trailer coupler may further comprise a warning system, to alert operators and bystanders to the moving trailer during retraction of the coupler bar into the housing, or when the trailer is reversing. Optionally the warning system may comprise a lighting warning system such as a strobe light or rotating light or an audio warning system such as a siren or a beeping sound. A rotating bracket may be provided on the socket side of the coupler bar that may be swung down & around the socket head to prevent the brakes from being actuated, thereby providing temporary means of disabling forward/backward movement of the sleeve when the vehicle is reversing to prevent actuation of the trailer braking system.

The splitable trailer coupler may comprise a security system, to disable the trailer coupler and hinder theft of the trailer coupler and/or trailer. For example the splitable trailer coupler of the present invention may further comprise a locking device, such as a bolt lock, pad lock or equivalent locking device. In one embodiment means may be provided to disable the means for connection of the coupler bar to a towing vehicle. Where a socket is provided, the disabling means may block the socket to prevent it receiving a tow bar. Optionally, the splitable trailer coupler may have a GPS tracking device installed therein. Optionally, the means for attachment to a tow hitch may be disconnectable from the coupler bar, thereby disabling the trailer. It will be appreciated that if the coupler bar is untethered from the trailer, it may be kept with the user to prevent unauthorised use of the trailer leaving nothing available on the trailer to attach the tow ball to. The tether may be permanently connected to, or manually disconnectable from, the coupler bar. An obstruction could be provided to prevent another coupler bar from being inserted in the sleeve to allow the trailer to be stolen.

The present invention further provides a peripheral lock comprising: a plurality of jaws arranged in a ring about a central aperture into which an article to be locked is receivable; wherein each jaw is pivotable between an open position and a closed position, wherein the size of the central aperture is greater when then the jaws are in their open position; biasing means for biasing each jaw in its closed position; and actuation means for pivoting each jaw against the biasing force provided by the biasing means. By article to be locked, it is meant an article to which the peripheral lock is to be locked to. The periphery lock may be slidable along the article, or the article may be slidable through the central aperture of the lock, when the lock is unlocked. Such slidable movement between the article and the lock is prevented when the lock is locked. Friction between an outer surface of the article and an inner surface of jaws may be sufficient to prevent relative movement between the lock's jaws and the article. The article may comprise a circumferential recess into which the jaws are received when locked to prevent such relative movement. The article to be locked may have an elongate form like a pole or post. The pole or post does not need to have a cylindrical form, it may have any cross sectional shape.

Preferably the biasing means comprises at least one stretchable connection between adjacent jaws. The at least one stretchable connection may be a spring. Each jaw may comprise a hook for each spring. Preferably each jaw is pivotable about a fulcrum pin which pivotally mounts the jaw to a static base. The static base may be a support plate for the jaws. The static base may comprise means for securement to second article, to which the article to be locked may be locked using the peripheral lock. Preferably the actuation means comprises an actuation plate wherein rotation of the actuation plate relative to the fulcrum pins causes a pivoting of the jaws.

Preferably each jaw is substantially trapezoid shaped in one cross-section. Each jaw may comprise multiple layers. Preferably each jaw has an object-engaging surface shaped to enable a close fit between the jaw and an object received in the central aperture when the jaw is in its closed position. The object-engaging surface is preferably concave.

The actuation means may comprise a manual handle. Preferably at least one slot is formed in the actuation plate. Each jaw may comprise at least one protrusion to travel within a corresponding slot in the actuator plate.

With reference to the trailer coupler of the present invention, the means for retaining the coupler bar in the housing may comprise the peripheral lock described above. However it will be appreciated that the peripheral lock of the present invention may be used with multiple objects and is not limited for use with the trailer coupler of the present invention. One such possible application is the connection of scaffolding poles where the lock may be positioned at one end of one pole and used to secure a second pole to the end of the first pole wherein one end of the second pole is lockable within the jaws of the peripheral lock.

### Brief Description of the Drawings

Embodiments of the invention will be described, by way of example only, with reference to the accompanying drawings in which:
**Figure 1** shows a splitable trailer coupler in accordance with one embodiment of the present invention connected to a winch via a winch cable;
**Figure 2** is a cross-sectional view of the splitable trailer coupler of Figure 1;
**Figure 3** is an enlarged cross-sectional view of the splitable trailer coupler of Figure 1;
**Figure 4** is a cross-sectional view of the sleeve shown in Figures 2 and 3.
**Figure 5** is a perspective view of the coupler of Figure 1 with the housing removed to show the sleeve;
**Figures 6a** to **6d** show the front and rear profiles of the housing of the coupler of Figure 1, with and without a sleeve therein;
**Figure 7** is a perspective view of the coupler bar of the hitch of Figure 1;
**Figures 8** and **9** are perspective and side views of the coupler bar of Figure 4, showing a circumferential groove defined in the coupler bar;
**Figure 10** is a cross sectional view of the coupler bar of Figure 9 showing one embodiment of locking means locked about its circumferential groove;
**Figure 11** is a cross sectional view of the locking means of figure 10 and the sleeve of figure 6;
**Figure 12a** to **12d** show the locking means/peripheral lock of figure 10;
**Figures 13a** and **13b** show the locking means at the rear of the housing of figure 1 with the cable removed for clarity;
**Figures 14a** to **14d** show the trajectory of one embodiment of a coupler bar retracting into one embodiment of a sleeve;
**Figures 15a** to **15d** show the trajectory of a further embodiment of a coupler bar retracting into a further embodiment of a sleeve from an uncoupled position;
**Figures 16a** to **16d** show a coupling head of a coupler in accordance with one embodiment of the present invention.
**Figure 17** shows a prior art trailer braking system.
**Figure 18** shows possible brake contact points on one embodiment of splitable trailer coupler of the present invention.

### Detailed Description of the Drawings

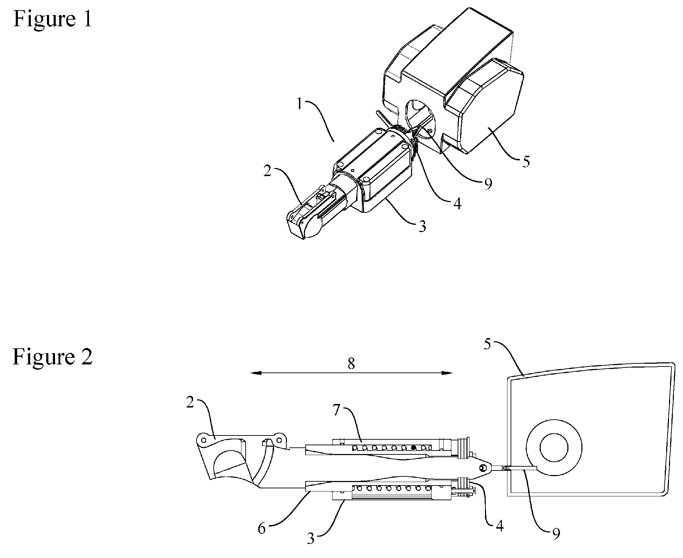

Figure 1 shows one embodiment of a splitable trailer coupler 1 in accordance with the present invention. The splitable/two-part trailer coupler comprises a coupler bar 2 comprising means for attachment to a towing vehicle, a housing 3 for attachment to the trailer vehicle, and means for retaining at least a portion of the coupler bar 2 within the housing 3, including locking means/peripheral lock 4. The trailer coupler is shown tethered to a winch 5 via a winch cable 9. The winch may be manually operated or motor driven to allow remote operation. Other types of tether may be employed to tether the removable coupler bar to the trailer, such as but not limited to at least one chain or rope or strap.

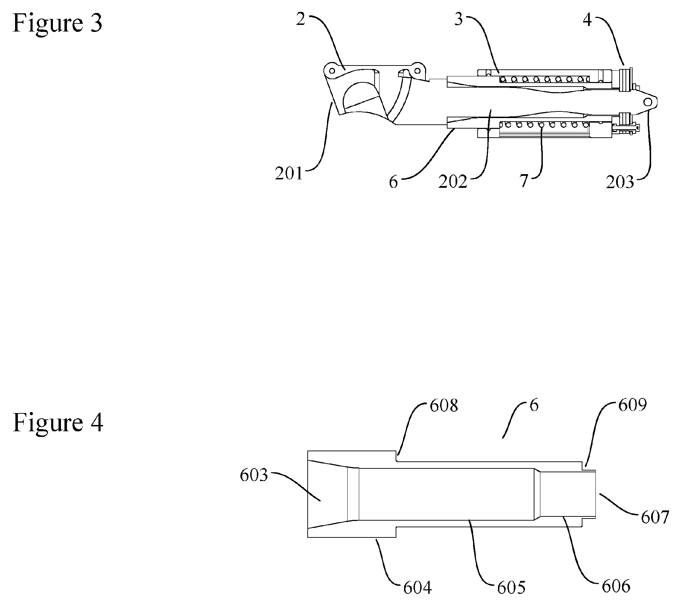

As shown in Figures 2 and 3, at least a portion of the coupler bar 2 is within the housing 3 when the coupler is in a locked configuration. When unlocked, the coupler bar 2 is removable from the housing 3 and once removed, movement of the coupler is uninhibited in three-dimensional space (provided there is no tension on winch cable 9). In the embodiment shown in Figures 1-3, the means for attachment to the towing vehicle comprises a tow bar socket. Once removed from the housing 3 the coupler bar 2 can be pulled towards the towing vehicle and the tow bar socket connected onto the tow ball of a towing vehicle. The coupler bar can then be retracted into the housing 3 using the winch and locked therein. Advantageously, this permits attachment of the trailer to a towing vehicle remote from the trailer, precluding the requirement for exact alignment of the towing vehicle with the trailer, or the necessity to manually manipulate the trailer when securing the trailer to the towing vehicle.

The portion of the coupler bar 202 that is receivable into the housing is, in this embodiment, substantially cylindrical in shape. As the sleeve also has a cylindrical internal cavity, the coupler bar 2 is capable of rotational movement within the sleeve. This ability to rotate remains even when the coupler bar is locked within the housing. Advantageously, this reduces shear stress placed on the coupler and the towing vehicle, when the trailer and towing vehicle travel over, or when they are parked on, uneven ground.

The coupler bar is also capable of translational movement within the housing when locked within the housing 3. This is achieved by the sleeve 6 being slidable within the housing, the sleeve therefor having freedom of movement relative to the housing along the longitudinal axis 8 of the housing, in particular rectilinear movement of the sleeve along the longitudinal axis of the housing. Advantageously, this enables the incorporation of a damping system within the two-part trailer coupler of the present invention.

Spring damping means 7 are provided between the sleeve 6 and the housing 3. The spring dampens movement of the sleeve within the housing 3, where damping is an influence within or upon an oscillatory system that has the effect of reducing, restricting or preventing its oscillations. In other embodiments multiple springs or other damping means may be provided.

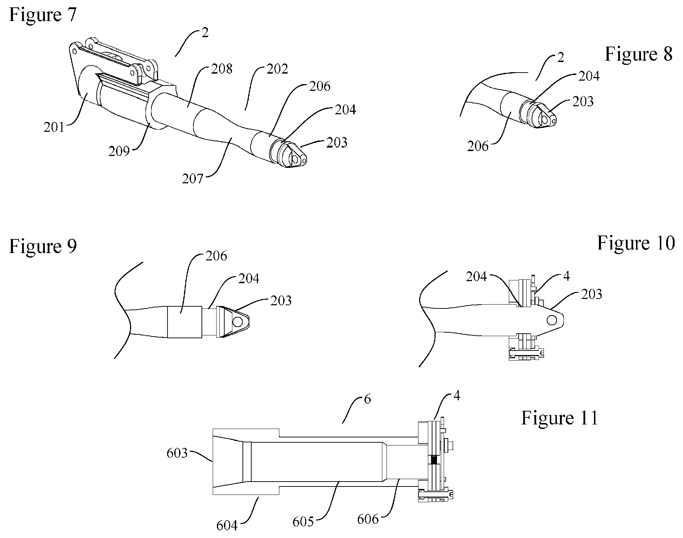

Figure 4 shows the sleeve 6 in greater detail. The interior of sleeve 6 comprises a front opening 603, a mid-section 605, a rear section 606, and a rear opening 607. The front opening 603 is frustoconical in shape, thereby providing an opening wider than the internal diameter of the mid-section, to facilitate the guiding of a coupler bar into the sleeve 6. An external collar 604 provides a shoulder 608 against which the spring acts. A further external shoulder 609 is provided proximal the rear opening 607 against which the locking means rest in use, as seen in Figure 11.

In Figure 5, the housing and locking means of figure 1 have been removed to show the sleeve 6 in use. The coupler bar extension is fully received into the sleeve, the sleeve abutting a shoulder 209 (Figure 7) formed at the connection of the coupling head extension to the part comprising the ball socket. The nose portion 203 of the coupler bar extension is shown protruding from the end of the sleeve distal to the socket end 201. The sleeve is shown to have flattened external side portions 601 and 602, which engage with corresponding features on the inside of the housing to prevent rotational movement of the sleeve relative to the surrounding housing. Only one pair of flattened side portions 601 and 602 are shown in figure 5, a further pair is out of sight on the opposite side of the sleeve. It will be appreciated however that just one flat would achieve the result of preventing rotation between the sleeve and the housing. Addition rotation inhibitors are provided on the collar surrounding rear opening 607, adjacent shoulder 609, in the form of at least one flattened/planar portion 611 of the sleeve's circumference/outer surface, as though a segment has been removed when a cross-section is considered. At least one corresponding flattened/planar portion is provided on the inner wall of the locking means. This prevents rotational movement between the sleeve and a static portion of the locking means.

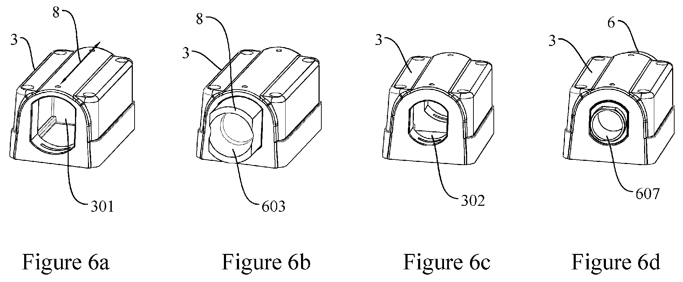

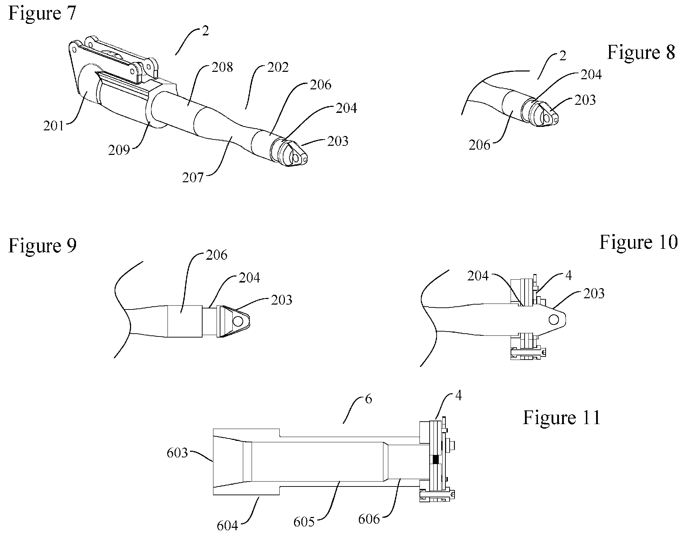

Figures 6a to 6d show the complementary internal shapes of the housing 3 and the external shapes of the sleeve 6. Figure 6a shows a front profile of the housing 3 without the sleeve. Figure 6b shows a front profile of the housing 3 with the sleeve 6. Figure 6c shows a rear profile of the housing 3 without the sleeve 6. Figure 6d shows a rear profile of the housing with the sleeve 6. Apertures 301 and 302 through the front and rear of the housing mimic the external shape of the sleeve's neck 601 and rear portion 602 in order to create a transitional fit between the components which reduces lateral or radial movement of the sleeve within the housing. The flattened sides of the apertures 301, 302 matches flattened sleeve sides 601 and 602 respectively, thus preventing rotational movement of the sleeve within the housing. These features do not impede translational movement of the sleeve within and along the longitudinal axis 8 of the housing 3.

Figure 7 is a perspective view of one embodiment of coupler bar 2, namely that shown in figures 1-3. The coupler bar 2 comprises means for attachment to a towing vehicle in the form of a tow ball socket 201, and a coupler bar extension 202. In this embodiment the coupler bar is a single unit. It will be appreciated that in alternative embodiments the coupler bar may have multiple parts connectable together and potentially interchangeable. This might be desirable to allow the coupler bar to be used with multiple types of towing vehicle hitches, whereby interchangeable means for attachment to a towing vehicle may be provided in a kit.

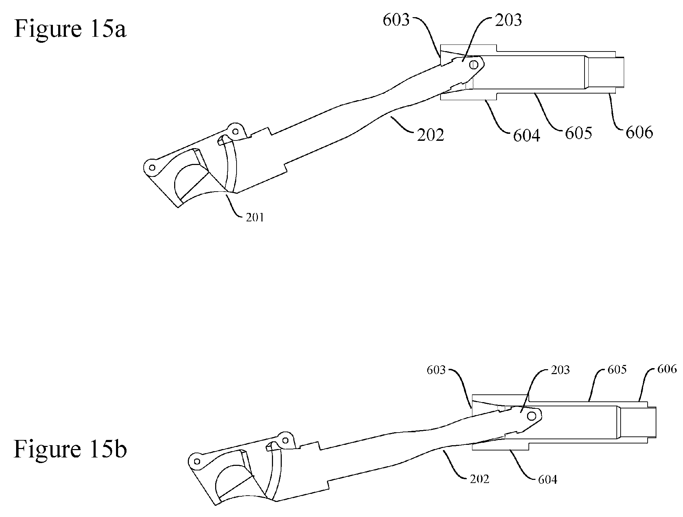

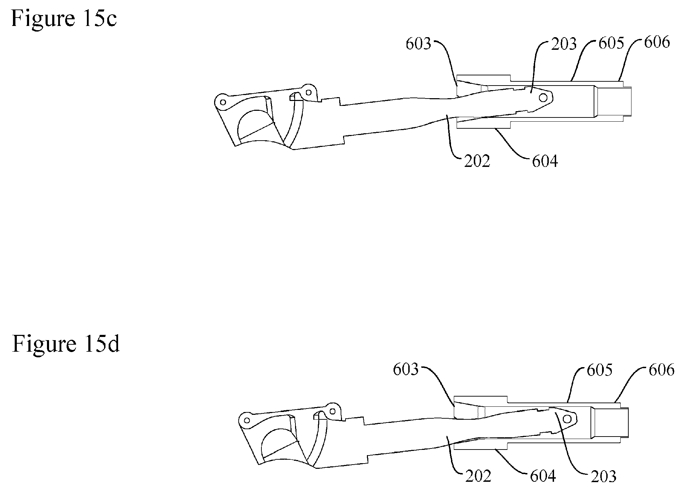

The coupler bar extension 202 comprises a nose portion 203 distal to the tow ball socket 201. The nose portion 203 is shaped to facilitate smooth insertion/retraction of the coupler bar into the housing 3, in this embodiment it is cone-shaped. Adjacent the nose portion there is formed a recess 204 to receive a circumferential lock. Adjacent to recess 204 is a cylindrical portion 206 dimensioned to sit within the rear section 606 of the sleeve when fully inserted into the sleeve. A midsection portion of the coupler bar extension 202 is substantially hourglass-shaped with a narrowed waist 207. This shape facilitates insertion of the coupler bar extension into the sleeve as shown in figure 15. A further cylindrical section 208 is located the other side of the narrowed waist 207. The diameter of section 208 is greater than that of section 206, and is sized to fit within mid-section 605 of the sleeve. As such the diameter of the coupler bar extension decreases from the end proximal the tow ball socket to the free end of the nose portion. In this embodiment the decrease in diameter is staged, but a more uniform decrease is possible in other embodiments. It is also possible for the coupler bar extension to increase in diameter from the end proximal the tow ball socket to the free end of the nose portion, or for the diameter of section 208 to match that of section 206.

While the coupler in Figure 7 comprises a socket for a tow bar ball, other forms of tow hitch connection could be provided depending on the towing vehicle's towing features. Examples of other forms of means for attachment to a towing vehicle include a hook/ring, an eye or a splitable clam-like socket for a tow ball.

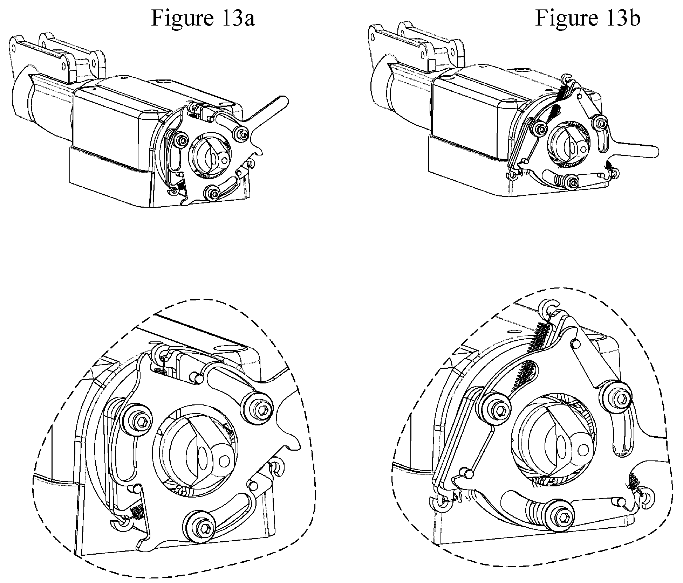

Figures 8 and 9 show the free end of the coupler bar extension in greater detail, in particular the circumferential groove or recess 204 defined in the coupler bar extension 202, proximal the nose portion 203. The recess is adapted to receive locking means. As shown in Figure 10, locking means 4 are receivable into the recess to prevent withdrawal of the coupler bar from the sleeve. As seen in Figure 11 the locking means 4 are located rearward of the sleeve 6, and abut the end face of the rear section 606 of the sleeve. The locking means may be fixed to the end of the sleeve or may simply contact the end of the sleeve without securement thereto. When fully assembled, and as shown in figure 13, the locking means are located at the rear of the housing, with the housing located between the locking means and the exposed section of the coupler bar. Figure 13a shows the locking means locked around the end of the coupler bar extension. Figure 13b shows how the locking means are released or opened. It will be appreciated that locking means may be located elsewhere than the position shown in these figures.

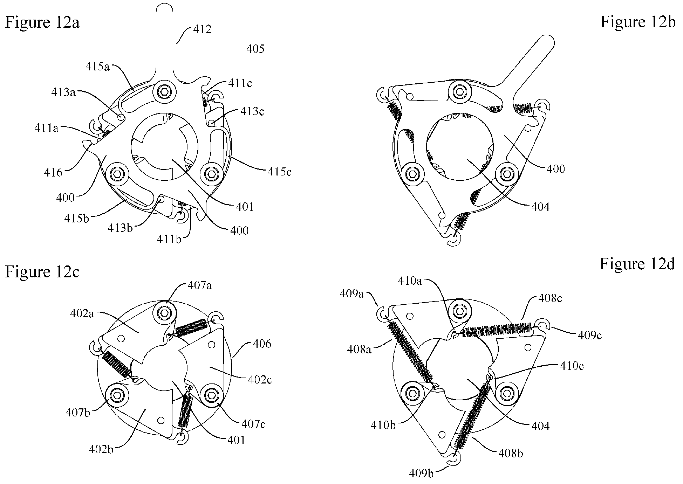

Figures 12a to 12d show one embodiment of locking means in the form of a peripheral lock. Figure 12a shows the lock 4 in a closed position 401, while figure 12b corresponds to figure 13b, where the lock is released. Figure 12c also shows the lock engaged, but actuator plate 400 which incorporates handle 412 has been removed to clearly show the lock's jaws 402a, 402b, 402c). Figure 12c also shows support plate 406 upon which these moveable jaws are mounted by way of mounting pins 407. Support plate 406 acts as a backing plate for the lock and is provided with a central aperture to receive a portion of the rear section 606 of sleeve 6 to enable the locking means to be mounted on the end of the sleeve or other item on which the lock is to be mounted. In this embodiment three jaws are provided, however the skilled person will appreciate that alternative numbers of jaws could also be used. For example, the locking means/peripheral lock may comprise one jaw, or two jaws or more than three jaws. In this embodiment each jaw is substantially trapezoid in shape, with its lower edge being concavely curved. As a result, when in a closed configuration, the combined curved edges of the jaws define a circular aperture. It will be appreciated that this internal edge of each jaw may not be curved but may take another form to define a different/non-circular shape of aperture in the centre of the jaws. The shape may be chosen to suit a certain shape of coupler bar. Likewise, each jaw may have a shape other than trapezoid.

Opening the lock results in the central aperture increasing in size, whereas closing the lock reduces the diameter of the central aperture as the jaws are drawn into the recess. When the jaws 402a-c are in the closed position 401 about the coupler bar extension 202, a portion of each jaw 402a-c is received within recess 204, preventing the coupler bar from sliding back out of the lock. Each jaw has a thickness less than the length of recess 204 to ensure that the jaws fit within the recess. In the closed position 401, the aperture has a diameter complementary in size to, or greater than, that of the coupler bar extension at recess 204. A tight fit is not essential, however enough of each jaw needs to be present in the recess to maintain a secure hold on the coupler bar and to prevent the coupler bar from sliding free from the lock when subjected to towing forces.

The jaws are shown to be orientated at a right angle to the longitudinal axis of the coupler bar, and normal to the cylindrical surface of the coupler bar extension.

It will be appreciated that the back plate needs to remain static when the handle is turned in order for the lock to open rather than swivel about the sleeve. In this embodiment the inner surface is non-circular and has at least one flattened portion to correspond to at least one flattened portion 611 on the sleeve. Other forms of rotation inhibits may be provided however. It may also be possible for the support plate 406 to be part of the sleeve, in which case no rotation inhibitors are necessary.

Each mounting pin 407a-c acts as a fulcrum, wherein each jaw is rotatable relative to the support plate 406, about its mounting pin, thereby enabling each jaw to pivot from a closed position 401 to an open position 404 and vice versa. A mounting pin hole is provided in each jaw through which the mounting pin is passed.

As seen in figure 13, each jaw in this embodiment is multi-ply, having three layers or plies. In other embodiments more or less layers or plates may be provided in a stack, or each jaw may have a one-piece or unitary structure. One of the layers has a pair of hook extensions 409, 410 for attachment of springs. Springs 408 are provided between and to connect the jaws and to bias the locking means/peripheral lock towards a closed position. Other forms of biasing means may be used such as magnetic, hydraulic or pneumatic biasing means.

A handle 412 is provided as an actuator to manually open the locking means/peripheral lock. The actuator 412 extends from actuator plate 400. Rotational movement of the handle/actuator plate relative to the support plate 406 imparts an actuating force to oppose the biasing force imparted by the springs, thereby opening the jaws from the closed position 401 towards the open position 404 as shown in Figure 12b. The handle is not required to close the lock, as the springs bias the lock to a closed position. Actuation in this embodiment is a handle but it will be appreciated that any radial actuation may be used to open the lock. Any such actuator may be a motor (locally or remotely controlled) or other electrical/mechanical (pneumatic/hydraulic) device. Control of the actuator may be local (at the device) or remote (wired, wireless, beam) via mechanical, electrical, electronic or optical means.

Slots 415 are provided in the actuator plate 400, through which the pins also pass, to allow the actuator plate 400 move relative to the mounting pins 407. The length of the slot limits the degree of rotation of the actuator plate/handle. Each slot 415 is curved in shape. Other limiting means may be used other than mechanical slots, dead stops, variable stops or other mechanical/electrical inhibitors. If the jaws are not interconnected with a biasing means but rather a remote biasing means, the allowable movement may could be limited by the natural stroke limits of hydraulic/pneumatic cylinders or the design degrees of freedom of other mechanical/electrical/electronic devices.

In the closed position shown in Figure 12a, protrusion 413, which protrudes from the actuating plate facing face of each jaw, rests at one end of a channel 411 formed on the outer edge of its respective jaw. As the actuator plate 400 rotates, the channel 411 acts against the protrusion 413, pushing the distal corner of the jaw radially outwards to rotate the jaw about its fulcrum point 407. The biasing force imparted by the springs 408a-c on jaws 402a-c is opposed and overcome, and the springs stretch as the jaws 402a-c open from the closed position 401 to an open position 404. This movement of the jaw is limited by a stop 416 that defines the far end of channel 411. In the open position, the protrusion 413 rests against stop 416 at the far end of the channel as shown in Figure 12b. The protrusion thus functions as a displacement limiter. Where each jaw is formed from a stack of jaw plates, the protrusion is a protruding end of a dowel that passes through each stacked plate to connect and hold the multiple jaw plates together to ensure that they move in unison. These slots in this embodiment are radially patterned 120 degrees on the actuator plate. They all have the same "slope" in relation to each other. Alternative embodiments of actuator plate may have the angles of each slot different such to lift the jaws out of the recess (or drop the jaws into the recess) out of unison. Unison is employed here but a skilled person will appreciate that the design can be modified to purposely employ staggered opening/closing sequences.

Co-operatively linking adjacent jaws by the springs further ensures that the jaws open and close in sync. In the event of one or more of the springs breaking or failing in use, at least one or all the jaws may remain biased in the closed position by the remaining functioning spring(s), as each jaw is connected to two springs. Thus the locking means/peripheral lock has a failsafe mechanism incorporated therein. The springs 408a-c connect jaws 402a-c via hooks 409a-c and 410a-c. The skilled person will appreciate that the springs may be connected by other means than hooks.. It will also be appreciated that other forms of jaw connectors may be used instead of springs. Alternatively, the jaws may not be connected together but other means resulting in a closed bias being generated on the jaw(s) may be provided, e.g. a jaw-spring-dowel-spring-jaw arrangement. Rotational movement in this embodiment is used to open and close the jaws. Alternative embodiments may not use radial movement but linear movement - i.e. each or a number of the protrusions 413 could be connected directly to a Hydraulic/Pneumatic cylinder and/or openable via a magnetic solenoid. Any method of applying a force to these protrusions which results in movement (open or close) over the jaws may be used.

The internal edges of the jaws may experience wear and tear in use through repeated contact with a coupler bar. This could result in the edge receding, resulting in a reduction in the depth of each jaw. Advantageously, due to the shape of the jaws, such wear and tear makes the lock stronger, so the lock gets stronger with use, not weaker. Consider the trapezoid shape of the jaws shown in these figures, or any shape where the width of the jaw decreases towards the internal edge of the jaw. If the edge recedes through wear, the coupler bar contact area increases as the internal edge will lengthen.

The embodiment of locking means described above is also one embodiment of peripheral lock according to the present invention.

As mentioned above, the design of the trailer coupler of the present invention allows the coupler bar to be unlocked and removed from the lock, housing and sleeve assembly, while this assembly remains attached to the trailer. Using the handle, the user can unlock the lock and manually pull the coupler bar free of the locking means. The locking means will return to a closed position when the handle is released. The coupler bar will still be attached via the winch cable, but as the cable unwinds from the winch, the user will be able to pull the coupler bar free of the trailer a sufficient distance to attach it to a towing hitch on a remote vehicle. The compact and simple nature of the coupler bar facilitates this manual handling of the coupler bar. Once the coupler bar is attached to the towing vehicle's tow hitch, the winch may be used to rewind the cable and draw the trailer towards the stationary vehicle. As the nose cone of the coupler bar contacts the opening of the sleeve, it will be guided into alignment with the sleeve and pulled through the sleeve by the cable until it contacts the still closed lock. As the force from the winch cable draws the coupler bar further into the sleeve, the coupler nose portion will reopen the lock by pushing the lock jaws apart, until the recess reaches the lock jaws, at which stage the lock jaws will automatically snap closed against the circumference of the circumferential recess, back to their biased closed position, as shown in Figure 13a. Further movement of the nose through the lock or back out of the lock is therefore prevented. The trailer is now ready to be towed. Above describes pulling the coupler bar free of the trailer, however it will be appreciated that in use it may be the trailer which moves free of the coupler bar. Consider for example where the trailer is on a slope and moves away under gravity when the lock is unlocked, for example to launch a boat on a launch slip. Drive means may alternatively be provided to withdraw the trailer from the coupler bar.

In the present embodiment, the free end of the coupler bar extension, the nose portion 203 is cone-shaped to achieve the opening of the jaws as the coupler bar extension is advanced into the housing and counteracts the closed bias. This contouring further encourages a smooth transition into the opening of the sleeve 6. Continued advancement of the coupler bar extension after contact is made with the lock's jaws, forces them apart. As the jaws are forced apart, the actuator plate and handle will rotate as described above with respect to the handle being turned.

When the coupler bar 2 is locked in the locking means the coupler bar, locking means and sleeve become a single combined unit of parts. The three parts are in essence locked together, although the coupler bar retains the ability to rotate within the housing and the lock. The circumferential nature of the lock allows this, as does the complimentary cylindrical nature of the interior of the sleeve and the exterior of the coupler bar extension. Along the longitudinal axis of the housing, however, the three parts move as one. The combined parts are capable of simultaneous translational movement along the longitudinal axis of the housing. This movement is dampened by the springs between the housing and sleeve, one end of the spring abutting an external shoulder of the sleeve and the other contacting a stop or a shoulder within the interior of the housing.

As shown in Figure 3, the abutting of the locking means against the end face of the housing prevents the coupler bar and surrounding sleeve from being withdrawn from the housing. However, the sleeve remains free to slide further through the housing, and as the sleeve is locked to the coupler bar by the lock, the lock will travel away from the end face of the housing as the sleeve slides further through the housing as the distance between the towing vehicle and towed trailer decreases. This compression of the splitable trailer coupler might occur as the towing vehicle decelerates or brakes. The spring dampens this movement and the opposite movement should the sleeve slide backwards away from the trailer. The coupler bar, the sleeve or the lock may engage with a trailer braking system to apply brakes to the trailer as the towing vehicle decelerates. It is therefore possible to monopolise the forward and backward translation of the sleeve within the housing in order to govern the braking force applied to or removed from a towed vehicle.

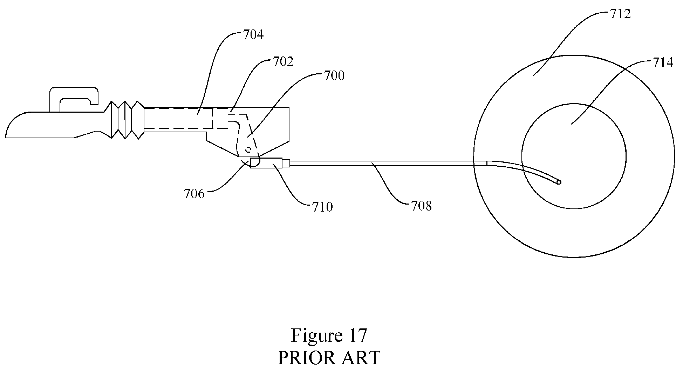

In traditional trailer braking systems incorporating a prior art coupler head, such as that shown in figure 17, an overrun lever 700 is a pivotal bracket which acts similar to a seesaw. The upper end 702 of the bracket rests constantly against the rear of a towing shaft 704 where the opposite lower end 706 is connected to a brake actuation cable 708. A yoke end 710 is used to connect the cable 708 to the overrun lever 700. The fulcrum point of this bracket is fixed.

### Tow vehicle braking

When the towing vehicle brakes, a translational displacement is induced in the towing shaft. Braking causes the towing shaft 704 to move backwards (to the right in the diagram) and due to this, a clockwise rotation is induced on the overrun lever 700. The rotation causes the upper end 702 of the overrun lever to move to the right and due to the fulcrum position, the lower end of the overrun lever moves to the left. This increases the tension in the brake cable/rod which in turn results in a proportional braking force being applied to the trailer wheels 712 by brake shoe 714. Alternatively, the overrun lever 700 might not be used where the braking or accelerating motion would be electronically detected (accelerometer/force-detector). The sensor would issue instructions to a mechanism (linear actuator, friction brake or other) which is either directly connected to or remote to the brakes of the towed vehicle to apply proportional braking force to the vehicle - i.e. Electronic braking. The braking force is deemed proportional as the force varies depending on the degree of translational displacement in the towing shaft 704 which is governed by the braking force applied in the drive vehicle and momentum of the towed vehicle.

### Tow vehicle acceleration

When the tow vehicle accelerates, the towing shaft 704 moves to the left (thus inducing a counter clockwise rotation on the overrun lever 700) which results in a reduction and/or removal of braking force on the towed vehicle wheels 712. Acceleration causes the towing shaft 704 to move forwards (to the left in the diagram) and due to this an anticlockwise rotation is induced on the overrun lever 700. The rotation causes the upper end 702 of the bracket to move to the left and due to the fulcrum position, the lower end of the brake moves to the right. This decreases the tension in the brake rod 708 which in turn results in a proportional braking force reduction to the trailer wheels 712. In summary, it is the forward and backward translation of the towing shaft 704 which governs the braking force applied or removed to the towed vehicle. The overrun lever 700 facilitates in the transfer of force to the brake rod.

The trailer coupler of the present invention does not have a towing shaft in the traditional sense. Sleeve 6 is a redesigned towing shaft which allows parts to pass through the centre of it whilst applying damping forces on the outside via damping means 7. It is possible to monopolise on the forward and backward translation of the sleeve 6 to govern the braking force applied or removed to the towed vehicle. An overrun lever 700 may be used with the trailer coupler to facilitate in the transfer of force to a brake rod. The present invention is thus capable of replicating traditional brake actuation performance with the added benefits of having a removable coupler bar.

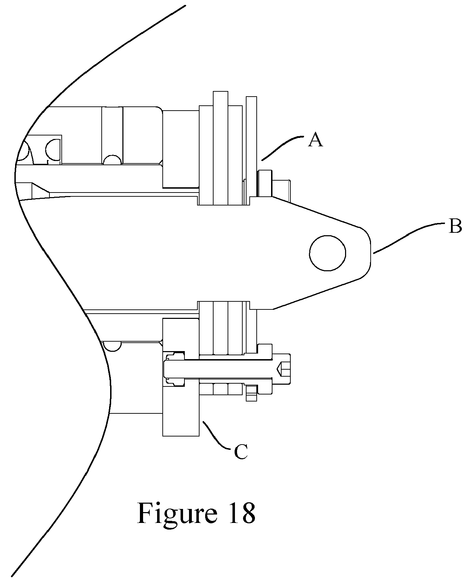

In existing trailers, the overrun lever upper end rests constantly on the backend of the towing shaft. The present invention provides at least three options of contact such to convert translational movement of the sleeve into rotation movement of an overrun lever, as shown in figure 18. This is possible due to the synchronous movement of the coupler bar, sleeve and lock.

Option A - overrun bracket rests up against the front face of the actuator plate as employed in the lock. As the sleeve and lock are secured to each other, the forces due to the translational movement will pass through the lock parts without compromising the hold on the coupler bar. Option B - overrun bracket rests up against the front face of the free/leading end of the coupler bar extension when in position & locked. As the sleeve and lock are secured to each other, the forces due to the translational movement will pass through the lock jaws without compromising the hold on the coupler bar. Option C - overrun bracket rests up against the front face of the lock's back support plate which is directly connected/attached/incorporated into the sleeve. As the sleeve and lock are secured to each other, the forces due to the translational movement will pass directly into the sleeve.

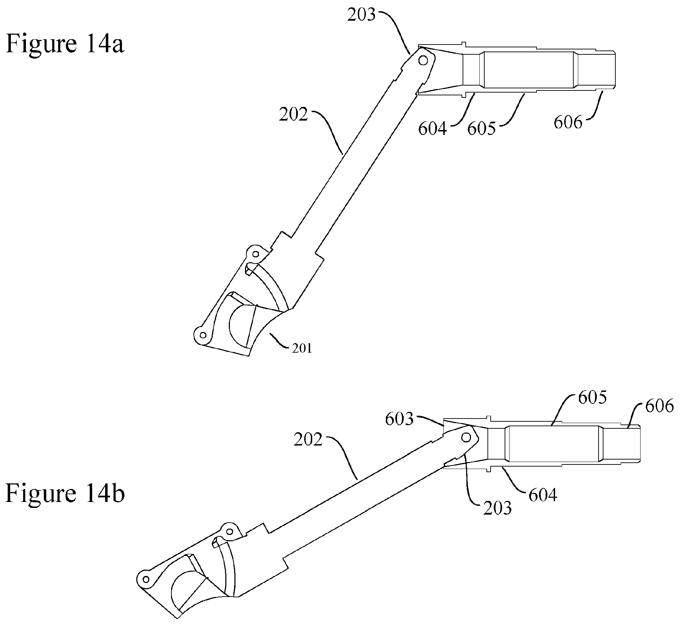

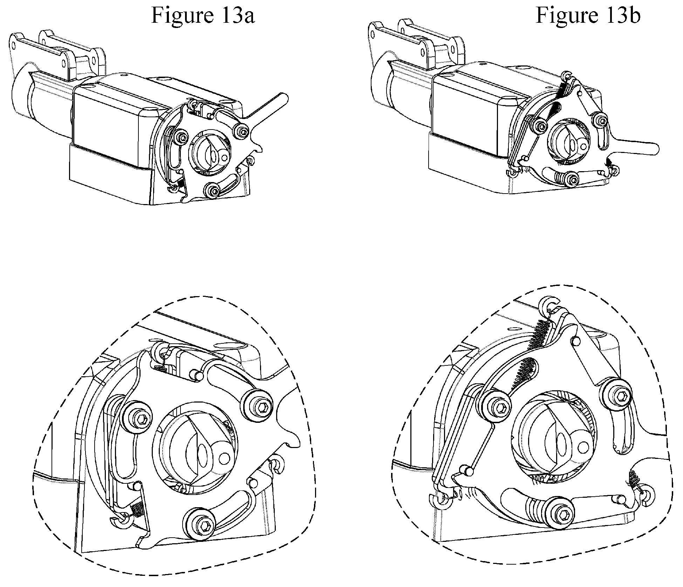

Figures 14a to 14d show the trajectory of a coupler bar extension retracting into one embodiment of sleeve from an uncoupled position, for example, wherein coupler bar 2 is being lifted from the ground and pulled towards and into the sleeve 6 through the sleeve opening 603. In this embodiment, the coupler bar extension has a cylindrical form. The incorporation of guide means on the coupler bar extension and in the sleeve, guides the coupler bar extension smoothly into the sleeve, and removes the requirement for exact horizontal or vertical alignment of the coupler bar and the sleeve. The present invention therefore allows insertion of the coupler bar into the sleeve even if the coupler bar approaches the sleeve at an angle from the longitudinal axis of the sleeve, regardless of whether the coupler bar approaches at an upwards angle, a downwards angle or a side angle. The guide means guide the coupler bar into alignment with the longitudinal axis of the sleeve, thereby adjusting its initial angle of incidence. This in turn can improve the alignment between the towing vehicle and the trailer. This embodiment of sleeve differs from that shown in in figure 14 in that there is a widening of the internal diameter of the sleeve rearward of the frustoconical sleeve opening 603. This increases the permissible angle of incidence of the coupler bar extension relative to the opening. In contrast, in figure 14 the internal diameter of the sleeve is constant from the narrowest part of the sleeve opening until it narrows at the juncture with the rear section 606.

Figures 15a to 15d show how the coupler bar from figure 7 is received into the sleeve of figure 6.

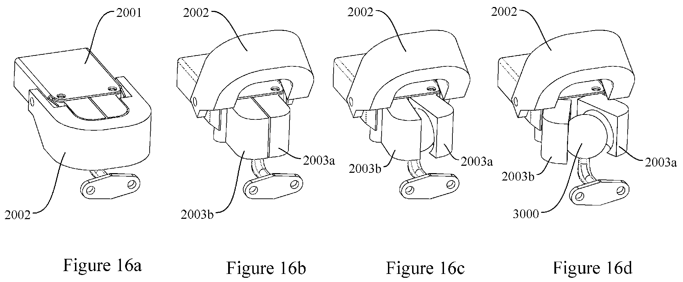

Figure 16 shows a splitable socket 2001 suitable for incorporation in the coupler bar of the present invention. Figure 16a shows the splitable socket mounted on a tow bar ball of a towing vehicle. Figures 16b-16d shows how the splitable socket engages with the tow bar. The splitable socket 2001 comprises a two-part socket having a shell-like form, wherein members 2003a and 2003b are pivotable between an open and closed position. Each member 2003 has a semi-circular internal recess. A guard 2002 is provided to lock the socket closed when the tow bar ball is secured with a spherical recess formed between the two members 2003a and 2003b. Figure 16c shows the splitting head members 2003a and 2003b partially closed about tow ball 3000 with guard 2002 in an open position. Figure 16d shows splitting head members 2003a and 2003b fully closed about tow ball 3000 with guard 2002 in an open position. The splitable socket 2001 opens as shown in Figure 16b and consequently there is no requirement for lifting the trailer off the tow ball. Once the splitable socket 2001 is opened the tow vehicle can drive away without further manipulation of the trailer to which the two-part trailer coupler is attached.

The locking means/peripheral lock embodiment shown in the accompanying drawings utilises biased locking forces via the use of springs. A skilled person would appreciate that if the springs were not in the place, the design of the radial plate could be modified such that the dowels travel within a closed slot thus rendering the locking means fully manual. Jaws would remain at the last position placed by the user. Means of locking the position of the jaws (be it open or closed) could be easily employed (pad lock, shear pin or other mechanical locking means). Locking can also be achieved via a rotation limiter as previously described.

The word "trailer" when used herein with reference to the present invention is used to indicate something that is towed. It may be a trailer onto which an item to be towed rests, or a caravan, or other storage vehicle, an oil bowser, or other towed vehicle.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A splitable trailer coupler for coupling a trailer to a towing vehicle, the splitable trailer coupler comprising:
a coupler bar (2) comprising means (201) for attachment to a towing vehicle;
a housing (3) for attachment to a trailer; wherein at least a portion of the coupler bar is removably receivable into the housing; and
means for retaining the at least a portion of the coupler bar in the housing;
wherein the trailer coupler is adapted to permit translational movement of the at least a portion of the coupler bar along the longitudinal axis of the housing when the at least a portion of the coupler bar is retained within the housing.

2. The splitable trailer coupler as claimed in claim 1, further adapted to enable rotation of the coupler bar (2) relative to the housing (3) when the at least a portion of the coupler bar is retained within the housing.

3. The splitable trailer coupler as claimed in claim 1 or claim 2, wherein the means for retaining the at least a portion of the coupler bar comprises a sleeve (6) into which the at least a portion of the coupler bar is secured.

4. The splitable trailer coupler as claimed in claim 3, wherein the sleeve (6) is capable of translational movement along the longitudinal axis of the housing.

5. The splitable trailer coupler as claimed in any proceeding claim, wherein the means for retaining the at least a portion of the coupler bar in the housing further comprises locking means (4).

6. The splitable trailer coupler as claimed in claim 5, wherein the locking means (4) surround the coupler bar (2) when the at least a portion of the coupler bar is retained in the housing.

7. The splitable trailer coupler as claimed in claim 5 or claim 6, wherein the locking means (4) are adapted to automatically lock as the at least a portion of the coupler bar is advanced into the housing.

8. The splitable trailer coupler as claimed in any of claims 5 to 7, wherein the locking means (4) are biased in a closed position and open upon contact from the at least a portion of the coupler bar.

9. A trailer comprising a splitable trailer coupler as claimed in any preceding claim.

10. A peripheral lock comprising:
a plurality of jaws (402a, 402b, 402c) arranged in a ring about a central aperture (401) into which an article to be locked is receivable; wherein each jaw is pivotable between an open position and a closed position, wherein the size of the central aperture is greater when then the jaws are in their open position;
biasing means (408a, 408b, 408c) for biasing each jaw in its closed position; and
actuation means (400, 412) for pivoting each jaw against the biasing force provided by the biasing means.

11. The peripheral lock of claim 10 wherein the biasing means comprises at least one stretchable connection between adjacent jaws.

12. The peripheral lock of claim 10 or claim 11 wherein each jaw is pivotable about a fulcrum pin (407a, 407b, 407c) which pivotally mounts the jaw to a static base (406).

13. The peripheral lock of claim 12 wherein the actuation means comprises an actuation plate (400) wherein rotation of the actuation plate relative to the fulcrum pins causes a pivoting of the jaws.

14. The peripheral lock of any of claims 10 to 13 wherein each jaw is substantially trapezoid shaped in one cross-section.

15. The peripheral lock of any of claims 10 to 14 wherein the actuation means comprises a manual handle (412).
